# EUROPEAN PATENT SPECIFICATION

(11) **EP 4 342 623 B1**
(45) Date of publication and mention of the grant of the patent: **03.06.2026**
(21) Application number: 22904585.1
(22) Date of filing: 05.12.2022
(51) Int. Cl.: B23K 26/362, H01M 4/04, H01M 50/531, B23K 101/36

(54) **ELECTRODE MANUFACTURING DEVICE USED FOR LASER NOTCHING OF ELECTRODE**
VORRICHTUNG ZUR HERSTELLUNG VON ELEKTRODEN ZUR LASERKERBUNG VON ELEKTRODEN
DISPOSITIF DE FABRICATION D'ÉLECTRODE UTILISÉ POUR L'ENTAILLAGE AU LASER D'UNE ÉLECTRODE

(30) Priority: 06.12.2021 KR 20210172820
(43) Date of publication of application: 27.03.2024
(73) Proprietor: LG Energy Solution, Ltd., Seoul 07335 (KR)
(72) Inventor: KIM, Sungdong, Daejeon 34122 (KR); SEO, Sangkee, Daejeon 34122 (KR)
(74) Representative: Plasseraud IP
(86) International application number: PCT/KR2022/019590
(87) International publication number: WO 2023/106755

(56) References cited:
- EP-B1- 3 415 265
- DE-A1- 102017 216 133
- JP-A- 2006 523 020
- KR-A- 20150 102 771
- KR-A- 20160 109 384
- KR-B1- 101 713 226
- KR-B1- 102 245 162
- US-B2- 10 661 386

## Description

### [Technical Field]

The present invention relates to an electrode manufacturing device used for laser notching of an electrode.

### [Background Art]

As the demand for mobile devices, electric vehicles, and the like increases, the demand for secondary batteries is rapidly increasing. In particular, lithium secondary batteries having high energy density and voltage among the secondary batteries have been commercialized and widely used.

The lithium secondary batteries are also classified according to a structure of an electrode assembly having a structure in which a cathode, an anode, and a separator interposed between the cathode and the anode are stacked. Examples of the electrode assembly according to such classification may include a jelly-roll type (wound type) electrode assembly having a structure in which cathodes and anodes having a long sheet shape are rolled with separators interposed therebetween, a stack type (layered type) electrode assembly in which a plurality of cathodes and anodes cut in units of a predetermined size are sequentially stacked with separators interposed therebetween, and the like. Recently, in order to solve problems of the jelly-roll type electrode assembly and the stack type electrode assembly, a stack/folding type electrode assembly, having a form in which the jelly-roll type electrode assembly and the stack type electrode assembly are mixed and having a structure in which unit cells in which cathodes and anodes of a predetermined unit are stacked with separators interposed therebetween are sequentially rolled in a state in which they are positioned on separation films, is also used.

Generally, such a secondary battery is completed by applying and drying electrode mixtures in which an electrode active material, a conductive agent, a binder, and the like are mixed on an electrode current collector to manufacture electrodes, stacking the manufactured electrodes together with a separator, and then embedding and sealing a laminate together with an electrolyte solution in a battery case.

In this case, the electrode is manufactured by notching an electrode sheet manufactured by applying the electrode active material on the electrode current collector having a long sheet shape, and then cutting the electrode sheet at a predetermined length.

Generally, a notching process is performed using a jig or a roller including a cutting part having a shape corresponding to the electrode. Recently, the notching process is also performed by a method of irradiating the electrode sheet with a predetermined laser so that the electrode can be formed in a more precise dimension.

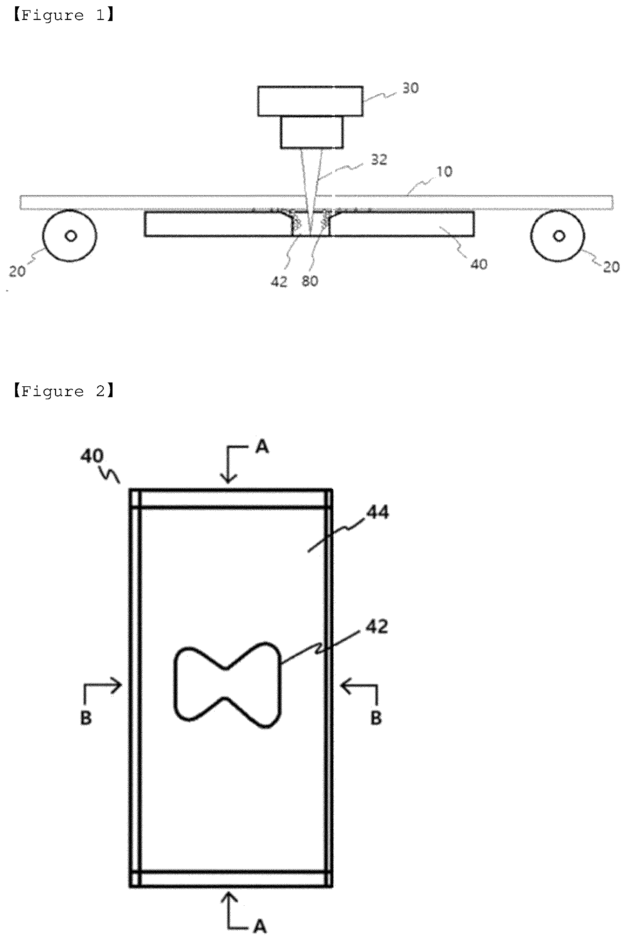

An electrode manufacturing device according to the related art using a laser is illustrated in FIG. 1. As illustrated in FIG. 1, in the electrode manufacturing device according to the related art has a disadvantage of causing a problem that foreign substances (spatters, etc.) generated at the time of notching damage to an electrode sheet while being accumulated or stuck and piled up around a pattern hole 42 of a pattern jig 40.

Therefore, improvement on such a problem is required.

### [Prior Art Document]

### [Patent Document]

Korean Patent No. 10-2158708 Document EP 3 415 265 B1, which forms the basis for the preamble of claim 1, discloses a method and a device tc high-throughput cutting of a ribbon-type substrate, particularly for an electrode of a battery, into separate pieces, implementing a laser and a support wheel having recesses.
Document DE 10 2017 216 133 A1 discloses a device for cutting off sections of strip-shaped material, comprising a driven wheel divided in the circumferential direction into individual circumferential segments, subjected to a vacuum and a laser separating a section from the strip-shaped material.

### [Disclosure]

### [Technical Problem]

The present invention has been devised to solve the problem of the related art as described above, and
an object of the present invention is to provide an electrode manufacturing device capable of effectively preventing foreign substances (spatters, etc.) generated at the time of laser notching of an electrode from being accumulated and stuck around a pattern hole of a pattern jig to damage an electrode sheet.

### [Technical Solution]

In order to achieve the above object, the present invention provides an electrode manufacturing device according to claim 1. The electrode manufacturing device after the invention may present one of more feature(s) of dependent claims 2 to 9, in any combination allowed by the claims.
The invention also relates to an assembly according to claim 10.

### [Advantageous Effects]

An electrode manufacturing device according to the present invention includes a pattern jig having an improved structure, and thus, may effectively prevent foreign substances (spatters, etc.) generated at the time of laser notching of an electrode from being accumulated and stuck around a pattern hole of the pattern jig to damage an electrode sheet.

### [Description of Drawings]

FIG. 1 is a schematic cross-sectional view illustrating an electrode manufacturing device according to the related art and a use state thereof.
FIG. 2 is a plan view illustrating an embodiment of a pattern jig used in an electrode manufacturing device according to a non-claimed example.
FIG. 3 is a cross-sectional view of illustrating an A-A cross section (a) and a B-B cross section (b) of the pattern jig of FIG. 2.
FIG. 4 is a schematic cross-sectional view illustrating an embodiment of the electrode manufacturing device according to a non-claimed example.
FIG. 5 is a perspective view illustrating another embodiment of the pattern jig used in the electrode manufacturing device according to the present invention.
FIG. 6 is a cross-sectional view of illustrating an A-A cross section of the pattern jig of FIG. 5.

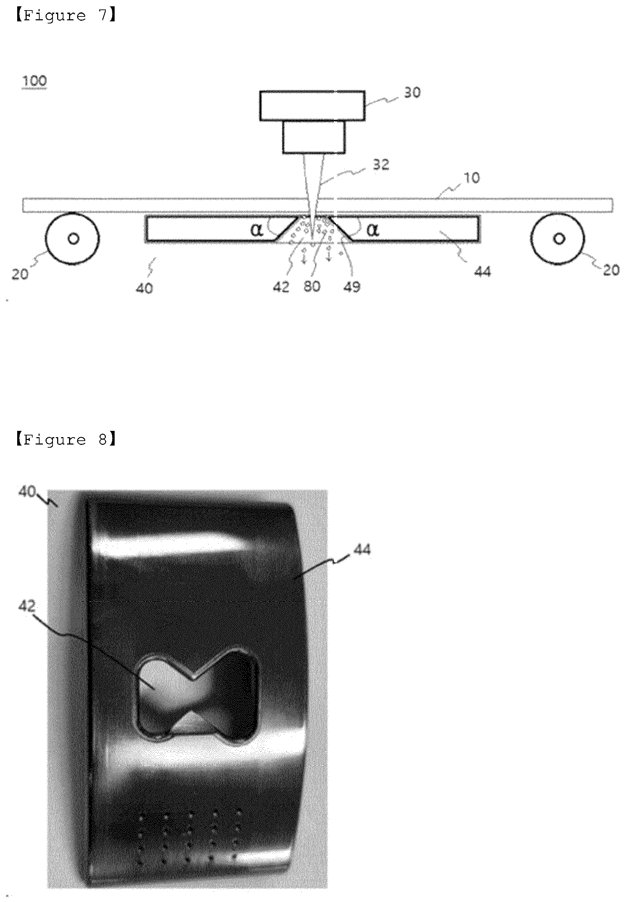

FIG. 7 is a schematic cross-sectional view illustrating another embodiment of the electrode manufacturing device according to the present invention.
FIG. 8 is a photograph illustrating another embodiment of the pattern jig used in the electrode manufacturing device according to the present invention.
FIG. 9 is a schematic cross-sectional view illustrating another embodiment of the electrode manufacturing device according to the present invention.

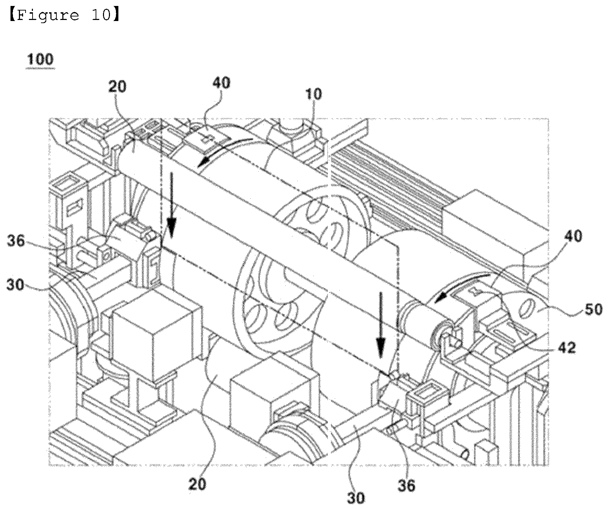

FIG. 10 is a schematic perspective view illustrating another embodiment of the electrode manufacturing device according to the present invention.

### [Best Mode]

Hereinafter, embodiments of the present invention will be described in detail with reference to the accompanying drawings so that those skilled in the art to which the present invention pertains may easily practice the present invention. However, the present invention may be implemented in various different forms, and is not limited to embodiments described herein. Throughout the specification, similar parts will be denoted by the same reference numerals.

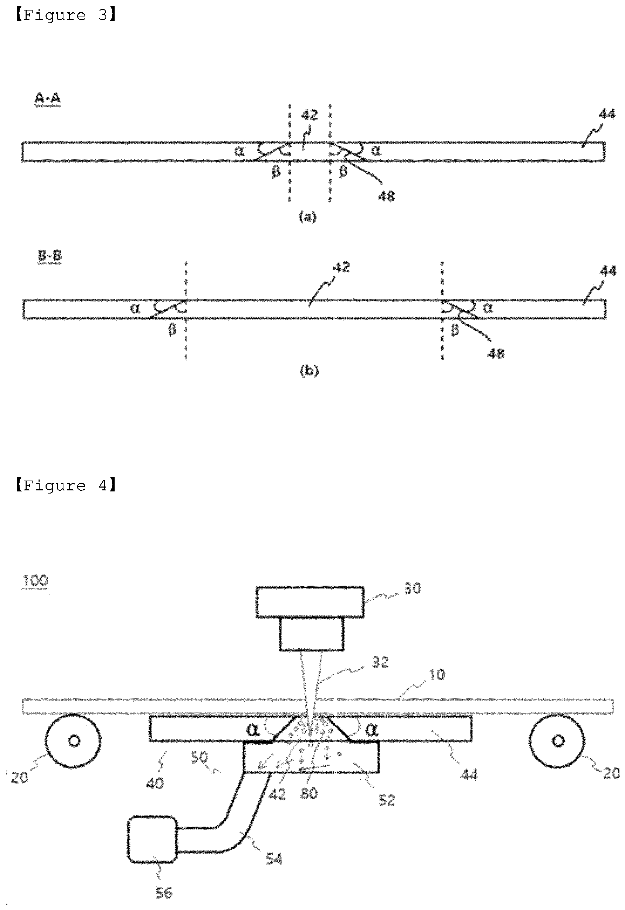

FIG. 2 is a plan view illustrating an embodiment of a pattern jig used in an electrode manufacturing device according to the present invention, FIG. 3 is a cross-sectional view of illustrating an A-A cross section (a) and a B-B cross section (b) of the pattern jig of FIG. 2, and FIG. 4 is a schematic cross-sectional view illustrating an embodiment of the electrode manufacturing device according to the present invention.

The electrode manufacturing device 100 according to the present invention includes a transfer part 20 continuously transferring an electrode sheet 10 in order to perform an electrode notching process; a laser irradiation part 30 irradiating the electrode sheet 10 with a laser beam to perform the electrode notching process; and a pattern jig 40 positioned at a portion facing a laser irradiation part with the electrode sheet 10 interposed therebetween to support the electrode sheet, as illustrated in FIG. 4,
wherein the pattern jig 40 includes a panel 44 including a pattern hole 42 through which the laser beam that has notched the electrode sheet 10 passes, and the pattern hole 42 has a structure in which it becomes wide from the front toward the rear based on a laser beam traveling direction.

The pattern jig 40 may be the panel 44 itself including the pattern hole 42, as illustrated in FIGS. 2 and 3, in a non-claimed example. The pattern jig may further include a fixing part for fixing the panel 44 to a suction device or the like in addition to the panel 44. The fixing part may include a support member, a fixing means, and the like, for suitably fixing the panel 44 to the suction device or the like. The fixing means may be, for example, a coupling hole for screw coupling, or the like.

In an embodiment of the present invention, the pattern hole 42 is formed as a through hole for the panel, and a wall 48 forming the through hole may include an inclined part forming an interior angle of 15° to 80°, preferably 15° to 70°, and more preferably 15° to 45° with an upper surface of the panel in a direction toward the laser irradiation part, as illustrated in FIG. 3.

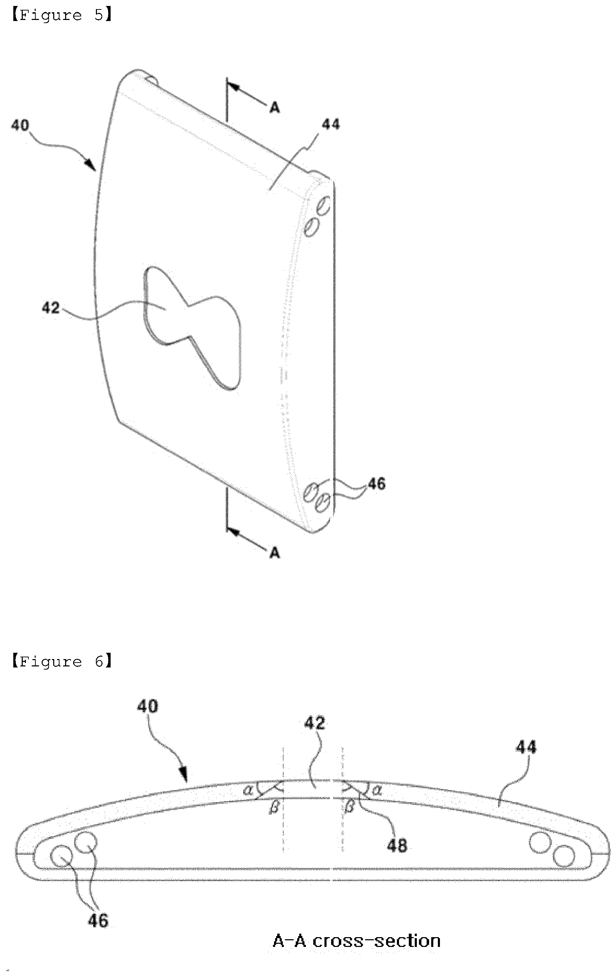

Meanwhile, the wall 48 may include an inclined part forming an interior angle of 10° to 75°, preferably 20° to 75°, and more preferably 45° to 75° based on an axis parallel to a central axis of the laser beam, as illustrated in FIG. 6.

In an embodiment of the present invention, the panel may have a thickness of 1.0 mm or less, preferably 0.7 mm or less, and more preferably 0.5 mm or less.

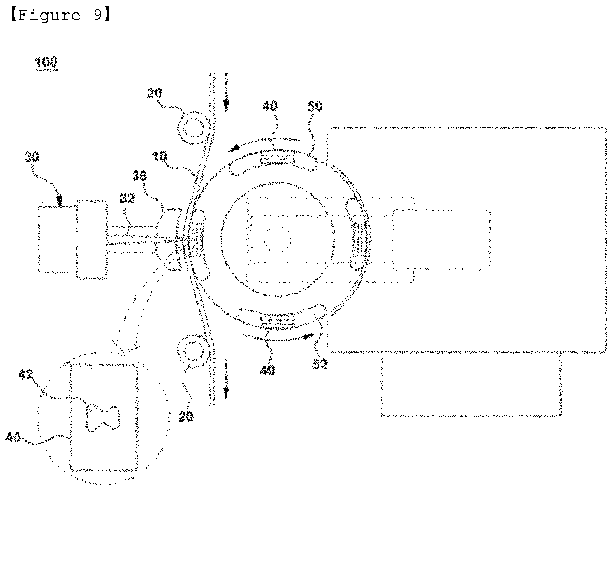

In an embodiment of the present invention, the pattern jig 40 may be fixed to an upper portion of the suction device 50, as illustrated in FIGS. 4 and 9. That is, in the electrode manufacturing device 100 according to the present invention, foreign substances (e.g., spatters) are generated at the time of notching of the electrode sheet 10 by the laser beam, and it is required to suck and remove such foreign substances. Accordingly, the pattern jig 40 may be installed together with the suction device. The suction device is installed in communication with the pattern hole 42 formed in the pattern jig 40, and performs a function of adsorbing foreign substances (e.g., spatters) generated in the pattern hole 42 and around the pattern hole by sucking air. In the above, the term "upper portion" refers to a position determined based on the laser beam traveling direction.

In an example not falling under the scope of the claims, the panel 44 including the pattern hole 42 may be a flat panel as illustrated in FIGS. 2 and 3 or as covered by the invention, a curved panel 44 convex in a direction toward the electrode sheet as illustrated in FIGS. 5 and 6. FIG. 5 is a perspective view illustrating another embodiment of the pattern jig used in the electrode manufacturing device according to the present invention, and FIG. 6 is a cross-sectional view of illustrating an A-A cross section of the pattern jig of FIG. 5.

When the pattern jig 40 includes the curved panel 44 convex in the direction toward the electrode sheet, the pattern jig 40 may be applied to, for example, an electrode manufacturing device as illustrated in FIG. 9. That is, the pattern jig 40 as described above may be used in a form in which it is fixed to a cylindrical drum suction 50 as illustrated in FIG. 9.

In the electrode manufacturing device illustrated in FIG. 9, the transfer part 20 of the electrode sheet 10 supplies the electrode sheet 10 so that the electrode sheet 10 can pass through the cylindrical drum suction 50 while surrounding a portion of the cylindrical drum suction 50. In this case, the pattern jig 40 is fixed to a surface of the cylindrical drum suction 50 in contact with the electrode sheet 10, and electrode notching is performed by a laser beam 32 irradiated from the laser irradiation part 30.

Three to ten pattern jigs 40 including the curved panel may be fixed to the cylindrical drum suction, and the electrode notching may be performed while the pattern jig 40 is replaced with another pattern jig 40 by rotation of the cylindrical drum suction 50 at the time of electrode notching.

In an embodiment of the present invention, a foreign substance adhesion prevention coating layer may be further provided on a surface of the panel including the pattern hole.

The foreign substance adhesion prevention coating layer may have a friction coefficient of 0.3 or less and preferably 0.15 or less and a surface roughness of 0.15 µm or less and preferably 0.1 µm or less.

When the friction coefficient exceeds 0.3, foreign substances may be accumulated or stuck, which is not preferable. In addition, when the surface roughness exceeds 0.15 µm, foreign substances may be accumulated or stuck, which is not preferable.

The foreign substance adhesion prevention coating layer may have a hardness of 1,800 to 2,000.

The foreign substance adhesion prevention coating layer may be formed of one or more coatings selected from a diamondlike carbon (DLC) coating, an AlCrN (Alcrona) coating, and the like, but is not limited thereto, and a known coating material may be used without limitation as long as a coating satisfies a material of the coating layer.

In an embodiment of the present invention, the electrode sheet 10 may include a coated portion that is coated with an electrode active material and a non-coated portion that is not coated with the electrode active material, on one surface or both surfaces of an electrode current collector.

In an embodiment of the present invention, the notching may be a process of notching an electrode tab or cutting the electrode into individual units.

### [Description of Reference Numerals]

- 10:: electrode sheet 20: transfer part
- 30:: laser irradiation part 32: laser beam
- 34 :: laser oscillation part 36 : suction part
- 40:: pattern jig 42: pattern hole
- 44:: panel 46: pattern jig fixing groove
- 48:: pattern hole wall 49: coating layer
- 50:: suction device 52: suction hole
- 54:: suction pipe 56: suction device
- 100:: electrode manufacturing device

## Claims

1. An electrode manufacturing device (100), comprising:
a transfer part (20) continuously transferring an electrode sheet (10) in order to perform an electrode notching process;
a laser irradiation part (30) irradiating the electrode sheet (10) with a laser beam (32) to perform the electrode notching process; and
a cylindrical drum suction (50), **characterised in that** the device (100) further comprises:
a pattern jig (40) positioned at a portion facing the laser irradiation part (30) with the electrode sheet (10) interposed therebetween to support the electrode sheet (10),
wherein the pattern jig (40) includes a panel (44) having a pattern hole (42) through which the laser beam (32) passes, the pattern hole (42) having width that increases in a direction the laser beam (32) travels,
wherein the panel (44) comprising the pattern hole (42) is a curved panel convex in a direction toward the electrode sheet (10),
wherein the pattern jig (40) comprising the curved panel (44) is fixed to the cylindrical drum suction (50).

2. The electrode manufacturing device (100) of claim 1, wherein the pattern hole (42) is formed as a through hole for the panel (44), and a wall (48) forming the through hole includes an inclined part forming an interior angle of 15° to 80° with an upper surface of the panel (44) in a direction toward the laser irradiation part (30).

3. The electrode manufacturing device (100) of claim 2, wherein the wall (48) forming the through hole forms an interior angle of 15° to 70° with the upper surface of the panel (44) in a direction toward the laser irradiation part (30).

4. The electrode manufacturing device (100) of claim 1, wherein the panel (44) has a thickness of 1.0 mm or less.

5. The electrode manufacturing device (100) of claim 1, wherein the pattern jig (40) is fixed to an upper portion of the cylindrical drum suction (50).

6. The electrode manufacturing device (100) of claim 1, wherein three to ten pattern jigs (40) comprising the curved panel (44) convex in the direction toward the electrode sheet (10) are fixed to the cylindrical drum suction (50), such that, in use, the electrode manufacturing device is suitable for performing electrode notching while the pattern jig (40) is replaced with another pattern jig (40) by rotation of the cylindrical drum suction (50) at the time of electrode notching.

7. The electrode manufacturing device (100) of claim 1, wherein a foreign substance adhesion prevention coating layer (49) is further provided on a surface of the panel (44) including the pattern hole (42).

8. The electrode manufacturing device (100) of claim 7, wherein the foreign substance adhesion prevention coating layer (49) has a friction coefficient of 0.3 or less and a surface roughness of 0.15 µm or less.

9. The electrode manufacturing device (100) of claim 7, wherein the foreign substance adhesion prevention coating layer (49) is formed of one or more coatings selected from a diamondlike carbon (DLC) coating and an AlCrN coating.

10. An assembly comprising the electrode manufacturing device (100) of claim 1 and an electrode sheet (10), wherein the electrode sheet (10) comprises a coated portion that is coated with an electrode active material and a non-coated portion that is not coated with the electrode active material, on one surface or both surfaces of an electrode current collector.

## Patentansprüche

1. Elektrodenherstellungsvorrichtung (100), umfassend:
eine Fördervorrichtung (20), die kontinuierlich eine Elektrodenfolie (10) transportiert, um einen Elektrodenausstanzprozess durchzuführen;
eine Laserbestrahlungseinheit (30), die die Elektrodenfolie (10) mit einem Laserstrahl (32) bestrahlt, um den Elektrodenausstanzprozess durchzuführen;
und
eine zylindrische Saugtrommel (50), **dadurch gekennzeichnet, dass** die Vorrichtung (100) weiterhin umfasst:
eine Mustervorrichtung (40), die an einem der Laserbestrahlungseinheit (30) gegenüberliegenden Abschnitt angeordnet ist, wobei die Elektrodenfolie (10) dazwischen angeordnet ist, um die Elektrodenfolie (10) zu stützen,
wobei die Mustervorrichtung (40) ein Paneel (44) umfasst, das ein Musterloch (42) aufweist, durch das der Laserstrahl (32) hindurchtritt,
wobei das Musterloch (42) eine Breite aufweist, die sich in der Richtung, in der der Laserstrahl (32) verläuft, vergrößert,
wobei das das Musterloch (42) enthaltende Paneel (44) ein gekrümmtes Paneel ist, das in Richtung auf die Elektrodenfolie (10) konvex ist,
wobei die das gekrümmte Paneel (44) umfassende Mustervorrichtung (40) an der zylindrischen Saugtrommel (50) befestigt ist.

2. Elektrodenherstellungsvorrichtung (100) gemäß Anspruch 1, worin das Musterloch (42) als Durchgangsloch für das Paneel (44) ausgebildet ist und worin eine Wand (48), die das Durchgangsloch ausbildet, einen geneigten Abschnitt umfasst, der mit einer Oberseite des Paneels (44) in Richtung auf die Laserbestrahlungseinheit (30) einen Innenwinkel von 15° bis 80° bildet.

3. Elektrodenherstellungsvorrichtung (100) gemäß Anspruch 2, wobei die das Durchgangsloch ausbildende Wand (48) mit der Oberseite des Paneels (44) in Richtung auf die Laserbestrahlungseinheit (30) einen Innenwinkel von 15° bis 70° bildet.

4. Elektrodenherstellungsvorrichtung (100) gemäß Anspruch 1, wobei das Paneel (44) eine Dicke von 1,0 mm oder weniger aufweist.

5. Elektrodenherstellungsvorrichtung (100) gemäß Anspruch 1, wobei die Mustervorrichtung (40) an einem oberen Abschnitt der zylindrischen Saugtrommel (50) befestigt ist.

6. Elektrodenherstellungsvorrichtung (100) gemäß Anspruch 1, wobei drei bis zehn Mustervorrichtungen (40), die das in Richtung auf die Elektrodenfolie (10) konvexe gekrümmte Paneel (44) umfassen, an der zylindrischen Saugtrommel (50) befestigt sind, sodass im Betrieb die Elektrodenherstellungsvorrichtung geeignet ist, einen Elektrodenausstanzvorgang durchzuführen, während die Mustervorrichtung (40) zum Zeitpunkt des Elektrodenausstanzens durch Rotation der zylindrischen Saugtrommel (50) durch eine andere Mustervorrichtung (40) ersetzt wird.

7. Elektrodenherstellungsvorrichtung (100) gemäß Anspruch 1, wobei eine Überzugsschicht (49) zur Verhinderung der Haftung einer Fremdsubstanz zusätzlich auf einer Oberfläche des Paneels (44), das das Musterloch (42) umfasst, vorgesehen ist.

8. Elektrodenherstellungsvorrichtung (100) gemäß Anspruch 7, wobei die Überzugsschicht (49) zur Verhinderung der Haftung einer Fremdsubstanz einen Reibungskoeffizienten von 0,3 oder weniger und eine Oberflächenrauheit von 0,15 µm oder weniger aufweist.

9. Elektrodenherstellungsvorrichtung (100) gemäß Anspruch 7, wobei die Überzugsschicht (49) zur Verhinderung der Haftung einer Fremdsubstanz aus einer oder mehreren Überzügen besteht, die ausgewählt sind aus einer diamantähnlichen Kohlenstoff-Beschichtung (DLC) und einer AlCrN-Beschichtung.

10. Anordnung, umfassend die Elektrodenherstellungsvorrichtung (100) gemäß Anspruch 1 und eine Elektrodenfolie (10), wobei die Elektrodenfolie (10) einen beschichteten Abschnitt, der mit einem Elektrodenaktivmaterial beschichtet ist, und einen unbeschichteten Abschnitt, der nicht mit dem Elektrodenaktivmaterial beschichtet ist, auf einer oder beiden Oberflächen eines Elektrodenstromkollektors umfasst.

## Revendications

1. Dispositif de fabrication d'électrode (100) comprenant :
une partie de transfert (20) transférant en continu une feuille d'électrode (10) afin de réaliser un processus d'entaillage d'électrode ;
une partie d'irradiation laser (30) irradiant la feuille d'électrode (10) avec un faisceau laser (32) pour réaliser le processus d'entaillage d'électrode ; et
une aspiration à tambour cylindrique (50),
**caractérisé en ce que** le dispositif (100) comprend en outre :
un gabarit de motif (40) positionné au niveau d'une partie en regard de la partie d'irradiation laser (30) avec la feuille d'électrode (10) interposée entre celles-ci pour supporter la feuille d'électrode (10),
dans lequel le gabarit de motif (40) inclut un panneau (44) présentant un trou de motif (42) à travers lequel passe le faisceau laser (32), le trou de motif (42) présentant une largeur qui augmente dans une direction dans laquelle se déplace le faisceau laser (32), dans lequel le panneau (44) comprenant le trou de motif (42) est un panneau incurvé convexe dans une direction vers la feuille d'électrode (10),
dans lequel le gabarit de motif (40) comprenant le panneau incurvé (44) est fixé à l'aspiration de tambour cylindrique (50).

2. Dispositif de fabrication d'électrode (100) selon la revendication 1, dans lequel le trou de motif (42) est formé en tant que trou traversant pour le panneau (44), et une paroi (48) formant le trou traversant inclut une partie inclinée formant un angle intérieur de 15° à 80° avec une surface supérieure du panneau (44) dans une direction vers la partie d'irradiation laser (30).

3. Dispositif de fabrication d'électrode (100) selon la revendication 2, dans lequel la paroi (48) formant le trou traversant forme un angle intérieur de 15° à 70° avec la surface supérieure du panneau (44) dans une direction vers la partie d'irradiation laser (30).

4. Dispositif de fabrication d'électrode (100) selon la revendication 1, dans lequel le panneau (44) présente une épaisseur de 1,0 mm ou moins.

5. Dispositif de fabrication d'électrode (100) selon la revendication 1, dans lequel le gabarit de motif (40) est fixé à une partie supérieure de l'aspiration à tambour cylindrique (50).

6. Dispositif de fabrication d'électrode (100) selon la revendication 1, dans lequel trois à dix gabarits de motif (40) comprenant le panneau incurvé (44) convexe dans la direction vers la feuille d'électrode (10) sont fixés à l'aspiration à tambour cylindrique (50), de sorte que, en utilisation, le dispositif de fabrication d'électrode est approprié pour réaliser un entaillage d'électrode tandis que le gabarit de motif (40) est remplacé par un autre gabarit de motif (40) par rotation de l'aspiration à tambour cylindrique (50) au moment de l'entaillage d'électrode.

7. Dispositif de fabrication d'électrode (100) selon la revendication 1, dans lequel une couche de revêtement de prévention d'adhérence de substance étrangère (49) est en outre disposée sur une surface du panneau (44) incluant le trou de motif (42).

8. Dispositif de fabrication d'électrode (100) selon la revendication 7, dans lequel la couche de revêtement de prévention d'adhérence de substance étrangère (49) présente un coefficient de frottement de 0,3 ou moins et une rugosité de surface de 0,15 µm ou moins.

9. Dispositif de fabrication d'électrode (100) selon la revendication 7, dans lequel la couche de revêtement de prévention d'adhérence de substance étrangère (49) est formée d'un ou de plusieurs revêtements choisis parmi un revêtement en carbone de type diamant (DLC) et un revêtement en AlCrN.

10. Ensemble comprenant le dispositif de fabrication d'électrode (100) selon la revendication 1 et une feuille d'électrode (10), dans lequel la feuille d'électrode (10) comprend une partie revêtue qui est revêtue d'un matériau actif d'électrode et une partie non revêtue qui n'est pas revêtue du matériau actif d'électrode, sur une surface ou les deux surfaces d'un collecteur de courant d'électrode.
